# EUROPEAN PATENT APPLICATION

(11) **EP 3 690 781 A1**
(43) Date of publication of application: **05.08.2020**
(21) Application number: 18877435.0
(22) Date of filing: 21.09.2018
(51) Int. Cl.: G06Q 20/36, G06Q 20/10, G06Q 20/32

(54) **ACCOUNT INFORMATION MANAGEMENT METHOD AND APPARATUS**

(30) Priority: 17.11.2017 CN 201711142746
(71) Applicant: Alibaba Group Holding Limited, Grand Cayman (KY)
(72) Inventor: WANG, Lei, Zhejiang 311121 (CN)
(74) Representative: Goddar, Heinz J.
(86) International application number: PCT/CN2018/106929
(87) International publication number: WO 2019/095847

(57) **Abstract**

An account information management method comprises: when an instruction of a first user for managing a first account thereof is received, obtaining information of a second user associated with the first user, and obtaining first transaction operation information of the first user performing a transaction operation by means of the first account (S201); then determining, according to a preset matching condition, second transaction operation information associated with the second user, in the first transaction operation information (S220); and enabling the second transaction operation information to be included in a second user information table in the first account.

## Description

### Technical Field

Embodiments disclosed in the present specification relate to the field of Internet technology, and in particular, to an account information management method and apparatus.

### Background

With the development of Internet technology and social economy, people perform various transaction operations through electronic accounts more and more frequently. For example, transaction operations such as consumption and wealth management are performed through accounts on payment platforms. More specifically, people make payment when shopping in supermarkets, pay for online consumption orders, or purchase stocks on stock exchange platforms by means of Alipay accounts.

As electronic accounts are used more and more extensively, transaction operation information therein is more complicated, and more aspects are involved accordingly. For example, transaction operation information generated when a user uses an account thereof to perform transaction operations often includes transaction operation information associated with other users. For example, a user may buy clothing, toys, learning materials, snacks, children's education funds, and the like for his or her children, or may buy health care products, travel packages, and the like for his or her parents. Therefore, a more effective method is needed to comprehensively manage users' electronic account information.

### Summary

The present specification discloses an account information management method and apparatus, wherein an information table of a second user associated with a first user is created by a first account of the first user, so that the first user may manage transaction operation information of the second user conveniently by means of the first account.

In a first aspect, an account information management method is provided. The method comprises:
when an instruction of a first user for managing a first account of the first user is received, obtaining information of a second user associated with the first user, and obtaining first transaction operation information of one or more transaction operations performed by the first user using the first account;
determining, according to a preset matching condition, second transaction operation information associated with the second user from the first transaction operation information; and
including the second transaction operation information in a second user information table in the first account.

In a second aspect, an account information management apparatus is provided. The apparatus comprises:
an obtaining unit, configured to, when an instruction from a first user for managing a first account of the first user is received, obtain information of a second user associated with the first user, and obtain first transaction operation information of one or more transaction operations performed by the first user using the first account;
a determining unit, configured to determine, according to a preset matching condition, second transaction operation information associated with the second user from the first transaction operation information; and
a processing unit configured to include the second transaction operation information in a second user information table of the first account.

According to the account information management method and apparatus provided in the present specification, first transaction operation information for one or more transaction operations performed by the first user is obtained by using the first account; second transaction operation information associated with a second user in the first transaction operation information is determined according to a preset matching condition; and the second transaction operation information is included in a second user information table in the first account, thus enabling the first user to create a second user information table by using the first account thereof and manage the second transaction operation information associated with the second user in the second user information table.

### Brief Description of the Drawings

In order to more clearly illustrate technical solutions of embodiments disclosed in the present specification, the accompanying drawings to be used in the specification of embodiments are briefly introduced below. Apparently, the accompanying drawings described below only represent a plurality of embodiments disclosed in the present specification. Those skilled in the art may derive other drawings from these accompanying drawings without creative efforts.
FIG. 1 is a schematic diagram of an application scenario of an account information management method according to an embodiment disclosed in the present specification;
FIG. 2 is a flow chart of an account information management method according to an embodiment disclosed in the present specification;
FIG. 3 is a schematic diagram of a terminal interface for inputting second user information according to an embodiment disclosed in the present specification;
FIG. 4 is a schematic diagram of first transaction operation information according to an embodiment disclosed in the present specification;
FIG. 5 is a schematic diagram of a second user information table according to an embodiment disclosed in the present specification;
FIG. 6 is a flow chart of an account information management method according to another embodiment disclosed in the present specification;
FIG. 7 is a schematic diagram of a category report in a second user information table according to an embodiment disclosed in the present specification; and
FIG. 8 is a schematic structural diagram of an account information management apparatus according to an embodiment disclosed in the present specification.

### Detailed Description

Embodiments disclosed in the present specification are described below with reference to the accompanying drawings.

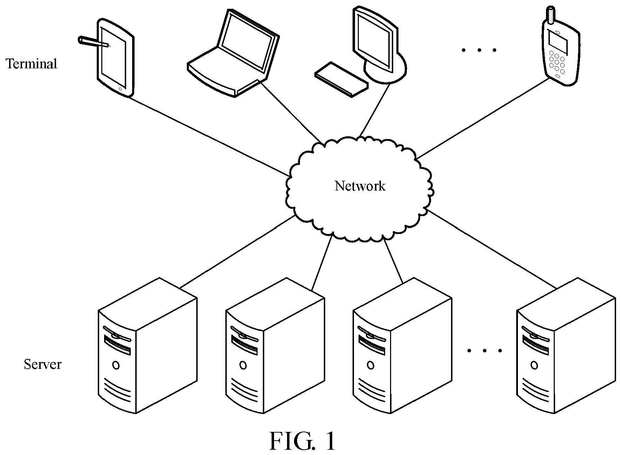

FIG. 1 is a schematic diagram of an application scenario of an account information management method according to an embodiment disclosed in the present specification. In FIG 1, when a server (for example, the server for the Alipay application) detects an instruction (for example, an instruction for creating a second user information table in a first account, or an instruction for viewing the second user information table in the first account) from a first user for managing a first account (for example, the first account may be an Alipay account) of the first user through a terminal (for example, a mobile phone, a tablet, or a wearable smart device), information of the second user (for example, the information of the second user may include gender, date of birth, educational background and the like) associated with the first user may be obtained; and first transaction operation information (for example, the first transaction operation information may be consumption information generated by the first user's purchase of children's books, or consumption information generated by payment for a gym card application) of one or more transaction operations (for example, the transaction operation may be purchasing children's books, or paying for a gym card application) performed by the first user using the first account may be obtained. The server may determine, according to a preset matching condition (for example, the preset matching condition may be that transaction operation information including a keyword "children"), second transaction operation information (for example, the second transaction operation information may be consumption information generated by the first user's purchasing of children's books) associated with the second user from the first transaction operation information, and include the second transaction operation information in a second user information table in the first account.

According to the account information management method provided in the embodiments disclosed in the present specification, first transaction operation information of one or more transaction operations performed by the first user using the first account may be obtained; second transaction operation information associated with the second user in the first transaction operation information may be determined according to a preset matching condition; and the second transaction operation information may be included in a second user information table in the first account, thus enabling the first user to create the second user information table by means of the first account thereof and manage the second transaction operation information associated with the second user in the second user information table.

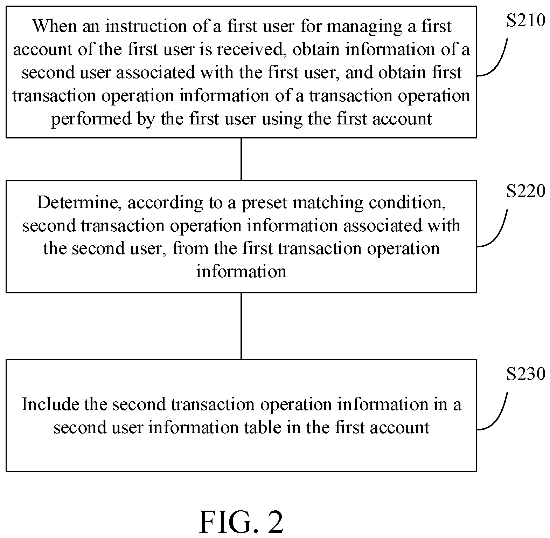

FIG. 2 is a flow chart of an account information management method according to an embodiment disclosed in the present specification. An executing body of the method may be a device having a processing capability: a server, a system, or a platform; for example, the server in FIG. 1. As shown in FIG. 2, the method comprises the following steps.

Step S210, obtain information of a second user associated with the first user when an instruction from a first user for managing a first account of the first user may be received, and obtain first transaction operation information of one or more transaction operations performed by the first user using the first account.

It should be noted that the instruction may be an instruction for creating a second user information table in the first account, an instruction for viewing the second user information table, or an instruction for editing the second user information table.

As an example, the server of the Alipay application may be used as the executing body in this step; an Alipay account may be the first account; and creating a second user information table in the first account may be the instruction.

Specifically, when receiving the instruction from the first user for creating a second user information table in the Alipay account of the first user, the server may obtain information of the second user associated with the first user and first transaction operation information of one or more transaction operations performed by the first user using the Alipay account.

Here, obtaining the information of the second user associated with the first user may include receiving information of the second user inputted by the first user. The information of the second user may include a name, an ID card number, a date of birth, a gender, a height, a weight, educational background, a hobby, an address and the like of the second user.

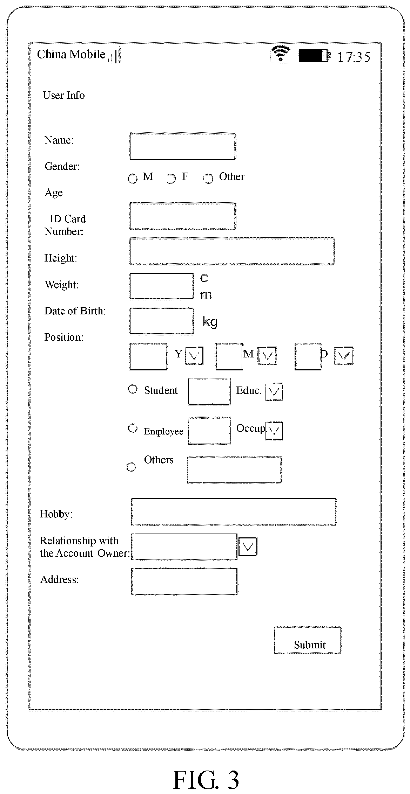

In one example, when receiving the instruction from the first user for creating the second user information table in the Alipay account of the first user, the server may receive the information of the second user inputted by the first user. For example, a terminal interface for entering the information of the second user by the first user is as shown in FIG. 3. In FIG 3, the information of the second user may include the name, gender, age, ID card number, height, weight, date of birth, status, hobby, relationship with the account owner (e.g., the first user), contact address, and the like.

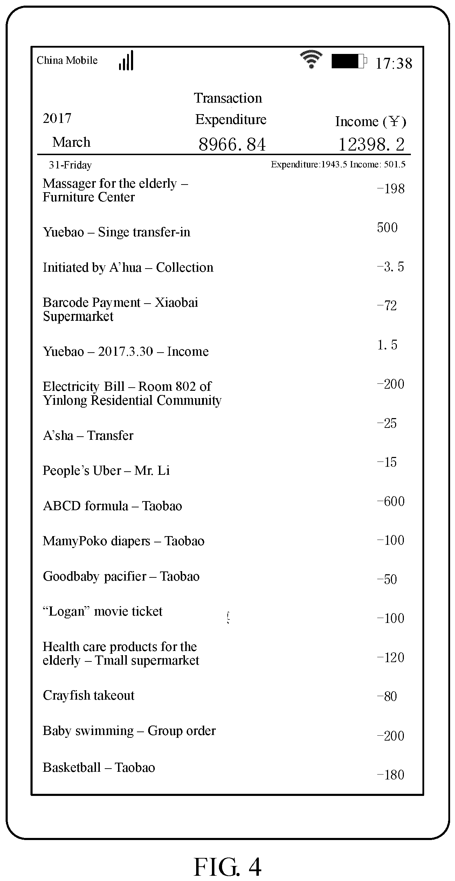

In addition, the first transaction operation information of one or more transaction operations performed by the first user using the Alipay account may be also obtained. For example, the first transaction operation information may include trade information generated from the transaction operation performed by the first user using the Alipay account, as shown in FIG. 4. FIG. 4 shows some trade information generated from transactions performed by the first user using the Alipay account in March 2017, including a total expenditure of ¥8966.84 and a total income of ¥12398.2 in March 2017. Here, on March 31 (Friday), the expenditure is ¥1943.5, and the income is ¥501.5. The specific transaction information may include: paying ¥198 for an massager for elderly at a furniture center, ¥500 transferred into from Yuebao in a single transaction, paying ¥3.5 to A'hua, paying ¥72 for consumption in Xiaobai Supermarket, receiving an income of ¥1.5 from Yuebao, paying an electricity bill of ¥200 for Room 802 in Yinlong Residential Community, transferring ¥25 to A'sha, paying ¥15 to Mr. Li for People's Uber service, paying ¥600, ¥100 and ¥50 respectively for ABCD formula, MamyPoko diapers, and baby pacifiers bought on Taobao, paying ¥100 for movie tickets, paying ¥120 for health care products for elderly at Tmall supermarket, paying ¥80 for ordering a crayfish takeout, paying ¥200 for a baby swimming group order, and paying ¥180 for a basketball bought at Taobao.

Then, in step S220, the second transaction operation information associated with the second user is determined from the first transaction operation information according to a preset matching condition.

For example, the server may directly determine, according to the preset matching condition, the second transaction operation information associated with the second user from the first transaction operation information.

Alternatively, in another example, the server may identify, according to the preset matching condition, recommended transaction operation information associated with the second user from the first transaction operation information; and then the server displays the recommended transaction operation information to the first user, receives transaction operation information selected by the first user from the recommended transaction operation information, and determines the selected transaction operation information as the second transaction operation information.

Here, the preset matching condition may include preset keywords and/or preset transaction operation objects. The preset keywords may be keywords preset by a user, default keywords provided by the server, or keywords determined by the server according to the information of the second user.

In one example, the preset matching condition may include preset keywords; and the server directly may determine, according to the preset keywords, the second transaction operation information associated with the second user from the first transaction operation information. For example, the keywords preset by the user include formula, diaper, and baby, and the first transaction operation information is as shown in FIG 4. Then, the server may directly determine, according to the keywords preset by the user, the second transaction operation information associated with the second user from the first transaction operation information. Such information may include paying ¥600, ¥100, and ¥50 respectively for ABCD formula, MamyPoko diapers, and baby pacifiers bought at Taobao and paying ¥200 for a baby swimming group order.

As another example, a default keyword provided by the server may include the word "elderly," and the first transaction operation information is as shown in FIG. 4. Then, the server may directly determine, according to the default keyword, the second transaction operation information associated with the second user from the first transaction operation information. Such information may include paying ¥198 for a massager for elderly at a furniture center and paying ¥120 for health care products for elderly at Tmall supermarket.

As yet still another example, a preset keyword may be determined by the server according to the information of the second user. The server may identify, according to the preset keyword, recommended transaction operation information associated with the second user from the first transaction operation information; and then the server may display the recommended transaction operation information to the first user, receive transaction operation information selected by the first user from the recommended transaction operation information, and determines the selected transaction operation information as the second transaction operation information.

For example, the information of the second user may include: July 27, 1934 as the date of birth, and Room 802 in Yinlong Residential Community as the address. The keywords determined by the server according to the information of the second user may include: elderly and Yinlong Residential Community. The first transaction operation information is as shown in FIG 4. The server may identify, according to the keyword "elderly," the recommended transaction operation information associated with the second user from the first transaction operation information. Such information may include: paying ¥198 for a massager for elderly at a furniture center, paying ¥120 for health care products for elderly at Tmall supermarket, paying an electricity bill of ¥200 for Room 802 in Yinlong Residential Community, paying ¥15 to Mr. Li for People's Uber service, and paying ¥80 for ordering a crayfish takeout. Then, the server may display the recommended transaction operation information to the first user, receive transaction operation information selected by the first user from the recommended transaction operation information, and determine the selected transaction operation information as the second transaction operation information. Such information may include: paying ¥198 for a massager for elderly at a furniture center, paying ¥120 for health care products for elderly at Tmall supermarket, paying an electricity bill of ¥200 for Room 802 in Yinlong Residential Community, and paying ¥15 to Mr. Li for People's Uber service.

In another example, the preset matching condition may include preset transaction operation objects. The server may determine, according to the preset transaction operation objects, the second transaction operation information associated with the second user from the first transaction operation information.

For example, the preset transaction operation objects may be a school and a children's hospital. The first transaction operation information may include: "transferring ¥800 for teaching materials to the First Experimental School, which is the transaction operation object," "transferring ¥200 to Wan Shunqiao Restaurant, which is the transaction operation object," and "transferring ¥150 as vaccine fees to the Municipal Children's Hospital, which is the transaction operation object." The server may identify, according to the preset transaction objects ("School" and "Children's Hospital"), the recommended transaction operation information associated with the second user from the first transaction operation information. Such information may include: "transferring ¥800 for teaching materials to the First Experimental School, which is the transaction operation object," and "transferring ¥150 as vaccine fees to the Municipal Children's Hospital, which is the transaction operation object."

Step S230, include the second transaction operation information in a second user information table in the first account.

For example, the server may include the second transaction operation information in the second user information table in the first account.

In one example, according to the instruction of the first user for creating a second user information table in the Alipay account of the first user, the server may create the second user information table, and include the second transaction operation information in the second user information table in the Alipay account.

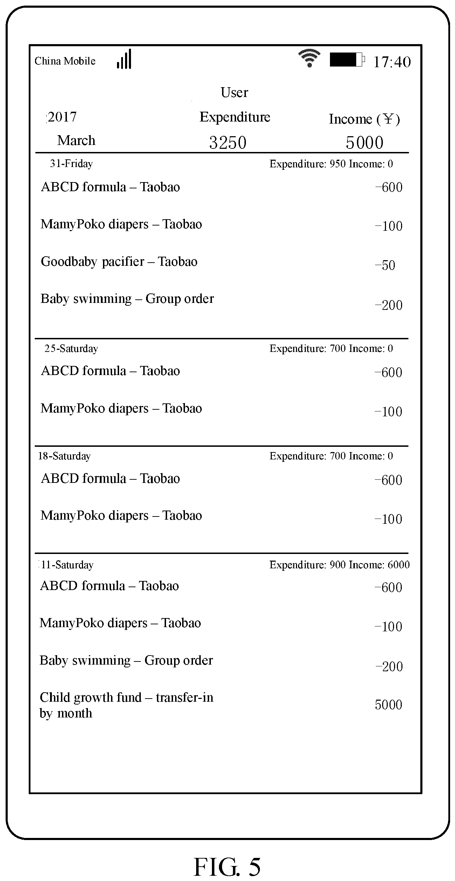

For example, FIG 5 shows the second user information table including the second transaction operation information. The second transaction operation information included in the information table in FIG. 5 is information generated in March 2017, specifically, a total expenditure of ¥3250 and a total income of ¥5000. On March 31, a total of ¥950 is paid for formula, diapers, pacifiers, and baby swimming; ¥700 is paid on March 18 and March 25 respectively for formula and diapers; on March 11, a total of ¥900 is paid for formula, diapers, and baby swimming; and ¥5,000 is transferred to the Child Growth Fund.

In this step, the server may further calculate, according to birthday information included in the information of the second user, a corresponding age of the second user when each piece of second transaction operation information is generated, and stores the calculated age in accordance with the second transaction operation information in the second user information table.

It should be noted that in one embodiment disclosed in the present specification, during or after step S210, the method may further comprise: obtaining third transaction operation information which may be generated by the first user performing one or more transaction operations associated with the second user by means of an account other than the first account; and including the third transaction operation information in the second user information table. Here, obtaining third transaction operation information may comprise receiving, by the server, the third transaction operation information inputted by the first user.

Alternatively, the account other than the first account may include an account associated with the first account; and obtaining third transaction operation information may be obtaining, by the server through the first account, the third transaction operation information in the account associated with the first account.

In another example, the server may receive third transaction operation information inputted by the first user and include the information in the second user information table. For example, the third transaction operation information may be generated from the transaction of the first user using cash to purchase children's toys. The server may receive the third transaction operation information inputted by the first user, such as "paying ¥500 for a remote-control go-kart," and include the information in the second user information table.

In another example, the server may obtain, through the first account, third transaction operation information from the account associated with the first account and include the information in the second user information table. For example, the first account may be an Alipay account, and the account associated with the first account may be a bank account. The server may obtain third transaction operation information from the bank account through the Alipay account, such as "paying ¥200 for kindergarten teaching materials," and then include the information in the second user information table.

A plurality of embodiments of the account information management method described above use the instruction for creating an information table as an example. In another embodiment, an instruction for account management may further include management instructions such as viewing, editing, and updating the created information table. Under such circumstances, in step S210, the obtained information of the second user may include only information that may identify a to-be-managed second user information table (since there may exist several second users and the corresponding second user information tables). Certainly, when managing the information table later, the first user may also supplement and complete the information of the second user in this step. In addition, the first transaction operation information obtained in this step may include only newly generated transaction operation information that has not yet included in the second user information table. Steps S220 and S230 are implemented in the same manner as described above, which will not be elaborated here again.

In conclusion, according to the account information management method and apparatus provided in the present specification, first transaction operation information of the first user performing one or more transaction operations by means of the first account may be obtained, second transaction operation information associated with the second user in the first transaction operation information may be determined according to a preset matching condition, and the second transaction operation information is included in a second user information table in the first account, thus enabling the first user to create the second user information table by means of the first account thereof and manage the second transaction operation information associated with the second user in the second user information table.

The method may be applicable to parents and children. For example, when the first user is a parent and the second user is a child of the parent, the parent may create an information table of the child in the parent's account; and the parent may determine, according to first transaction operation information generated from one or more transaction operations performed by means of the parent's account, second transaction operation information associated with the child, thereby conveniently and efficiently managing the information table of the child.

The method may also be applicable to adults and parents. For example, the first user is an adult and the second user is the adult's mother. The adult may create an information table of the mother in the adult's account, and may determine, according to first transaction operation information generated from one or more transaction operations performed by means of the adult's account, second transaction operation information associated with the mother, thereby conveniently and efficiently managing the information table of the mother. For example, when several adults work collectively to support their parents, support costs may be shared according to the information in the information tables of the parents, and the information may help the adults to better care for their parents.

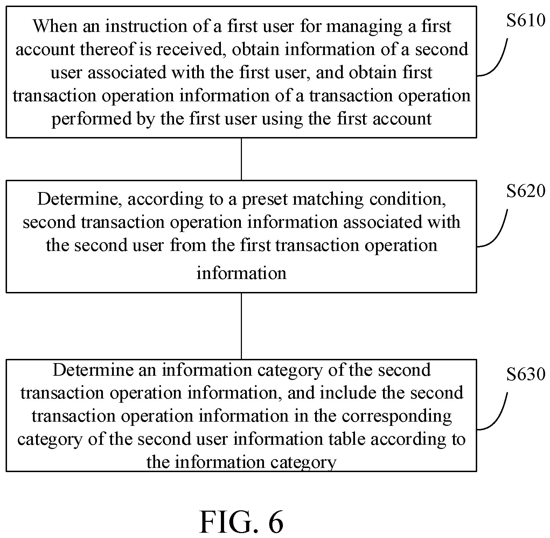

FIG. 6 is a flow chart of an account information management method according to another embodiment disclosed in the present specification. An executing body of the method may be a device having a processing capability: a server, a system, or a platform; for example, the server in FIG. 1. As shown in FIG 6, the method comprises the following steps.

Step S610, obtain information of a second user associated with the first user when an instruction from a first user for managing a first account of the first user is received, and obtain first transaction operation information of one or more transaction operations performed by the first user using the first account.

In this step, the second user associated with the first user may include several second users. Accordingly, the first user may create several second user information tables by means of the first account thereof.

It should be noted that for the specification of step S610, reference may be made to the above specification of step S210.

Step S620, determine, according to a preset matching condition, second transaction operation information associated with the second user from the first transaction operation information.

Here, the preset matching condition may include preset keywords, and the preset keywords may be determined by a server according to the information of the second user.

For example, the first user creates two second user information tables by using the first account thereof; and the first transaction operation information generated from the one or more transaction operations performed by the first user using the first account thereof includes "paying ¥500 for a set of boy's clothing" and "paying ¥500 for a set of girl's clothing."

When the first user views one of the second user information tables, and the keyword determined by the server according to the information of the second user includes "male," then according to the keyword, the server may determine, from the first transaction operation information such as "paying ¥500 for a set of boy's clothing" and "paying ¥500 for a set of girl's clothing," that "paying ¥500 for a set of boy's clothing" is the second transaction operation information associated with the second user information.

Alternatively, when the first user views another second user information table, and the keyword determined by the server according to the information of the second user includes "female," then according to the keyword, the server may determine, from first transaction operation information not included in another second information table such as "paying ¥500 for a set of girl's clothing", that "paying ¥500 for a set of girl's clothing" is the second transaction operation information associated with the second user information.

It should be noted that for the specification of step S620, reference may be made to the above specification of step S220.

Step S630, determine an information category of the second transaction operation information, and include the second transaction operation information in a corresponding category of the second user information table according to the information category.

In this step, the information category of the second transaction operation information may be a default information category provided in the second user information table or may be a customized information category inputted by the first user to the second information table.

For example, the server may display to the first user the second transaction operation information and information categories included in the second user information table, and receives an information category of the second transaction operation information selected by the first user from the information categories included in the second user information table. Then, the server may include the second transaction operation information in the corresponding category of the second user information table according to the information category.

Alternatively, the server displays the second transaction operation information to the first user, and receives the information category of the second transaction operation information inputted by the first user. Then, the server may include the second transaction operation information in the corresponding category of the second user information table according to the information category.

In one example, the server displays to the first user the second transaction operation information such as "baby swimming group order: ¥200" and information categories included in the second user information table, such as "baby food, formula, baby clothing, diapers, bath and skin care, daily supplies, toys and musical instruments, books and videos, education expenditure, medical health, maternal products, and family time." In addition, the server receives "family time" selected by the first user from the information categories as the information category for "baby swimming group order: ¥200." Then, the server may include "baby swimming group order: ¥200" in the information category "family time" of the second user information table.

In another example, the server displays to the first user the second transaction operation information such as "Goodbaby pacifier-Taobao: ¥50," and receives a customized information category such as "daily supplies" inputted by the first user. Then, the server may include "Goodbaby pacifier-Taobao: ¥ 50" in the information category "daily supplies" of the second user information table.

It should be noted that for the specification of step S630, reference may be made to the above specification of step S230.

In addition, in one embodiment disclosed in the present specification, after step S630, the method may further comprise: generating a category report in the second user information table according to the information category of the second transaction operation information and the second transaction operation information.

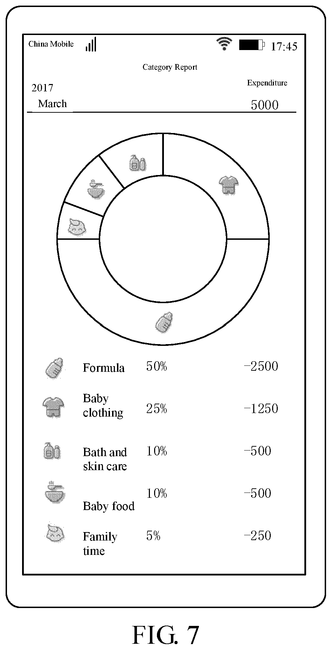

For example, the generated category report may be as shown in FIG. 7. In FIG. 7, the category report includes the following information: in March 2017, a total of ¥2,500 is paid for the "formula" category, accounting for 50% of the total expenditure (hereinafter referred to "accounting for"); a total of ¥1,250 is paid for the "baby clothing" category, accounting for 25%; a total of ¥500 is paid for the "bath and skin care" category, accounting for 10%; a total of ¥500 is paid for the "baby food" category, accounting for 10%; and a total of ¥250 is paid for the "family time" category, accounting for 5%.

After step S630, the method may further comprise synchronizing information in the second user information table to a second account of the second user. Moreover, according to the information in the information table, a portion corresponding to the information may be transferred into the second account.

For example, in the process of raising a child, parents may create an information table of the child in their account. After the child grows up and opens an account, the parents may synchronize information of the child in the information table to the child's account. If the information shows a cash balance, the parents may also choose to transfer the corresponding cash balance to the child's account, so that the child may view the information synchronously or manage the account.

According to the account information management method provided in one embodiment disclosed in the present specification, first transaction operation information of one or more transaction operations performed by the first user using the first account may be obtained; second transaction operation information associated with the second user in the first transaction operation information may be determined according to a preset matching condition; and the second transaction operation information may be included in a second user information table in the first account, thus enabling the first user to create the second user information table by means of the first account thereof and manage the second transaction operation information associated with the second user in the second user information table.

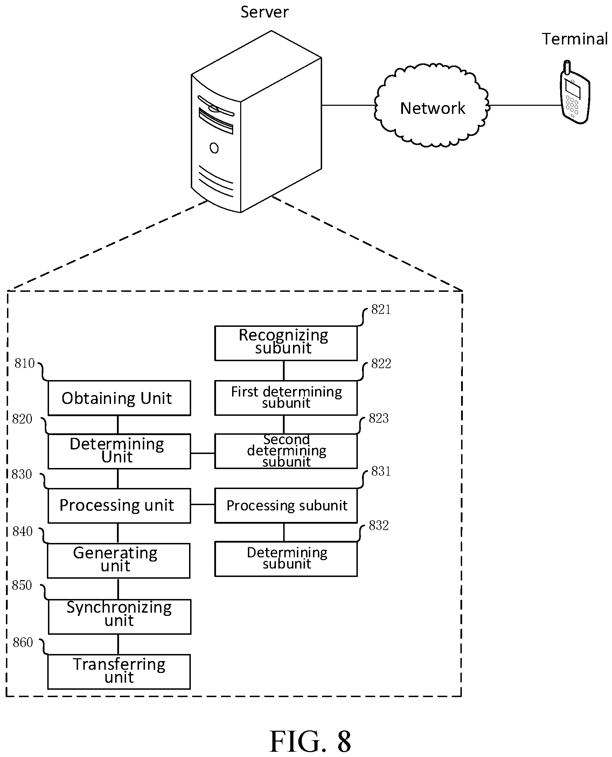

Corresponding to the above-described account information management method, an account information management apparatus is further provided in a plurality of embodiments disclosed in the present specification. As shown in FIG. 8, the apparatus comprises:
an obtaining unit 810, configured to, when an instruction from a first user for managing a first account of the first user is received, obtain information of a second user associated with the first user, and obtain first transaction operation information of one or more transaction operations performed by the first user using the first account;
a determining unit 820, configured to determine, according to a preset matching condition, second transaction operation information associated with the second user, from the first transaction operation information; and
a processing unit 830, configured to include the second transaction operation information in a second user information table in the first account.
In a possible design, the instruction for managing the first account received by the obtaining unit 810 may include an instruction for creating a second user information table in the first account; and
the obtaining information of a second user associated with the first user by the obtaining unit 810 comprises receiving information of the second user inputted by the first user.

In a possible design, the determining unit 820 may comprise:
an identifying subunit 821, configured to identify, according to a preset matching condition, recommended transaction operation information associated with the second user from the first transaction operation information; and
a first determining subunit 822, configured to display the recommended transaction operation information to the first user, receive transaction operation information selected by the first user from the recommended transaction operation information, and determine the selected transaction operation information as the second transaction operation information.

In a possible design, the preset matching condition in the determining unit 820 may include preset keywords.

In a possible design, the determining unit 820 further comprises a second determining subunit 823, configured to determine the preset keywords according to the information of the second user.

In a possible design, the information of the second user obtained by the obtaining unit 810 may include at least one of the names, ID card number, date of birth, gender, height, weight, educational background, and hobby of the second user.

In a possible design, the second user information table in the processing unit 830 may include an information category, and the processing unit 830 comprises:
a determining subunit 831, configured to determine an information category of the second transaction operation information; and
a processing subunit 832, configured to include the second transaction operation information in the corresponding category of the second user information table according to the information category.

In a possible design, the determining subunit 831 is configured to display to the first user the second transaction operation information and information categories included in the second user information table, and receive an information category of the second transaction operation information selected by the first user from the information categories included in the second user information table.

In a possible design, the determining subunit 831 is configured to display the second transaction operation information to the first user and receive an information category of the second transaction operation information inputted by the user.

In a possible design, the apparatus may further comprise:
a generating unit 840, configured to generate a category report in the second user information table according to the information category of the second transaction operation information and the second transaction operation information.

In a possible design, the obtaining unit 810 is further configured to obtain third transaction operation information generated from one or more transaction operations associated with the second user performed by the first user using an account other than the first account; and
the processing unit 830 is further configured to include the third transaction operation information in the second user information table.

In a possible design, the obtaining third transaction operation information by the obtaining unit 810 comprises receiving third transaction operation information inputted by the first user.

In a possible design, the account other than the first account obtained by the obtaining unit 810 may include an account associated with the first account; and
the obtaining third transaction operation information by the obtaining unit 810 comprises obtaining third transaction operation information from the account associated with the first account through the first account.

In a possible design, the apparatus may further comprise a synchronizing unit 850, configured to synchronize information in the second user information table to a second account of the second user.

In a possible design, the apparatus may further comprise a transferring unit 860, configured to transfer, according to information in the information table, a balance corresponding to the information into the second account.

The above-described implementation manners provide further details for the purposes, technical solutions, and beneficial effects of the embodiments disclosed in the present specification. It should be understood that what is described above is only implementation manners of the plurality of the embodiments disclosed in the present specification and is not intended to limit the protection scope of the embodiments disclosed herein. Any modification, equivalent replacement, improvement, and the like made on the basis of the technical solutions of the plurality of the embodiments disclosed herein should fall in the protection scope of the plurality of embodiments disclosed in the present specification.

## Claims

1. An account information management method, comprising:
when an instruction of a first user for managing a first account of the first user is received, obtaining information of a second user associated with the first user, and obtaining first transaction operation information of one or more transaction operations performed by the first user using the first account;
determining, according to a preset matching condition, second transaction operation information associated with the second user from the first transaction operation information; and
including the second transaction operation information in a second user information table of the first account.

2. The method according to claim 1, wherein the instruction for managing the first account of the first user comprises an instruction for creating the second user information table in the first account; and
the obtaining information of a second user associated with the first user comprises receiving information of the second user inputted by the first user.

3. The method according to claim 1, wherein the determining, according to a preset matching condition, second transaction operation information associated with the second user from the first transaction operation information comprises:
identifying, according to the preset matching condition, recommended transaction operation information associated with the second user from the first transaction operation information; and
displaying the recommended transaction operation information to the first user, receiving transaction operation information selected by the first user from the recommended transaction operation information, and determining the selected transaction operation information as the second transaction operation information.

4. The method according to any of claims 1-3, wherein the preset matching condition comprises preset keywords.

5. The method according to claim 4, wherein before the determining, according to a preset matching condition, second transaction operation information associated with the second user from the first transaction operation information, the method further comprises:
determining the preset keyword according to the information of the second user.

6. The method according to any of claims 1 to 3 and claim 5, wherein the information of the second user comprises at least one of a name, an ID card number, a date of birth, a gender, a height, a weight, educational background, a hobby and an address of the second user.

7. The method according to claim 1, wherein the second user information table comprises information categories, and the including the second transaction operation information in a second user information table of the first account comprises:
determining an information category of the second transaction operation information; and
including, according to the information category, the second transaction operation information in a corresponding category of the second user information table.

8. The method according to claim 7, wherein the determining an information category of the second transaction operation information comprises:
displaying to the first user the second transaction operation information and information categories included in the second user information table and receiving an information category of the second transaction operation information selected by the first user from the information categories included in the second user information table.

9. The method according to claim 7, wherein the determining an information category of the second transaction operation information comprises:
displaying the second transaction operation information to the first user and receiving an information category of the second transaction operation information inputted by the user.

10. The method according to any of claims 7 to 9, wherein the method further comprises:
generating, according to the information category of the second transaction operation information and the second transaction operation information, a category report in the second user information table.

11. The method according to claim 1, wherein the method further comprises:
obtaining third transaction operation information, wherein the third transaction operation information is generated by the first user performing one or more transaction operations associated with the second user by means of an account other than the first account; and
including the third transaction operation information in the second user information table.

12. The method according to claim 11, wherein the obtaining third transaction operation information comprises:
receiving the third transaction operation information inputted by the first user.

13. The method according to claim 11, wherein an account other than the first account comprises an account associated with the first account; and
the obtaining third transaction operation information comprises: obtaining the third transaction operation information from the account associated with the first account through the first account.

14. The method according to claim 1, wherein the method further comprises:
synchronizing information in the second user information table to a second account of the second user.

15. The method according to claim 14, wherein the method further comprises:
transferring, according to information of the information table, a portion corresponding to the information into the second account.

16. An account information management apparatus, comprising:
an obtaining unit, configured to, when an instruction from a first user for managing a first account of the first user is received, obtain information of a second user associated with the first user, and obtain first transaction operation information of one or more transaction operations performed by the first user using the first account;
a determining unit, configured to determine, according to a preset matching condition, second transaction operation information associated with the second user from the first transaction operation information; and
a processing unit configured to include the second transaction operation information in a second user information table of the first account.

17. The apparatus according to claim 16, wherein the instruction for managing the first account received by the obtaining unit comprises an instruction for creating the second user information table in the first account; and
the obtaining information of a second user associated with the first user by the obtaining unit comprises receiving information of the second user inputted by the first user.

18. The apparatus according to claim 16, wherein the determining unit comprises:
an identifying subunit, configured to identify, according to the preset matching condition, recommended transaction operation information associated with the second user from the first transaction operation information; and
a first determining subunit, configured to display the recommended transaction operation information to the first user, receive transaction operation information selected by the first user from the recommended transaction operation information, and determine the selected transaction operation information as the second transaction operation information.

19. The apparatus according to any of claims 16 to 18, wherein the preset matching condition in the determining unit comprises preset keywords.

20. The apparatus according to claim 19, wherein the determining unit further comprises a second determining subunit, configured to determine the preset keyword according to the information of the second user.

21. The apparatus according to any of claims 16 to 18 and claim 20, wherein the information of the second user obtained by the obtaining unit comprises at least one of an ID card number, a date of birth, a gender, a height, a weight, educational background, a hobby, and an address of the second user.

22. The apparatus according to claim 16, wherein the second user information table in the processing unit comprises information categories, and the processing unit comprises:
a determining subunit, configured to determine an information category of the second transaction operation information; and
a processing subunit, configured to, according to the information category, include the second transaction operation information in a corresponding category of the second user information table.

23. The apparatus according to claim 22, wherein the determining subunit is configured to:
display to the first user the second transaction operation information and information categories included in the second user information table and receive an information category of the second transaction operation information selected by the first user from the information categories included in the second user information table.

24. The apparatus according to claim 22, wherein the determining subunit is configured to:
display the second transaction operation information to the first user and receive an information category of the second transaction operation information inputted by the user.

25. The apparatus according to any of claims 22 to 24, wherein the apparatus further comprises:
a generating unit, configured to, according to the information category of the second transaction operation information and the second transaction operation information, generate a category report in the second user information table.

26. The apparatus according to claim 16, wherein the obtaining unit is further configured to obtain third transaction operation information, wherein the third transaction operation information is generated by the first user performing one or more transaction operations associated with the second user by means of an account other than the first account; and
the processing unit is further configured to include the third transaction operation information in the second user information table.

27. The apparatus according to claim 26, wherein the obtaining third transaction operation information by the obtaining unit comprises:
receiving the third transaction operation information inputted by the first user.

28. The apparatus according to claim 26, wherein the obtaining an account other than the first account by the obtaining unit comprises an account associated with the first account; and
the obtaining third transaction operation information by the obtaining unit comprises: obtaining the third transaction operation information from the account associated with the first account through the first account.

29. The apparatus according to claim 16, wherein the apparatus further comprises:
a synchronizing unit configured to synchronize information in the second user information table to a second account of the second user.

30. The apparatus according to claim 29, wherein the apparatus further comprises:
a transferring unit, configured to transfer, according to information of the information table, a balance corresponding to the information into the second account.
